# EUROPÄISCHE PATENTSCHRIFT

(11) **EP 0 965 412 B1**
(45) Veröffentlichungstag und Bekanntmachung des Hinweises auf die Patenterteilung: **08.05.2002**
(21) Anmeldenummer: 99201799.6
(22) Anmeldetag: 07.06.1999
(51) Int. Cl.: B23P 15/00, C22C 14/00, B21C 23/14, B21K 1/22, F01L 3/02

(54) **Verfahren zur Herstellung eines Tellerventils aus y-TiAl-Basislegierung**
Process for producing a TiAl-based alloy poppet valve
Procédé pour la production d'une soupape à champignon à base d'une alliage de TiAl

(30) Priorität: 08.06.1998 AT 38198
(43) Veröffentlichungstag der Anmeldung: 22.12.1999
(73) Patentinhaber: PLANSEE Aktiengesellschaft, 6600 Reutte, Tirol (AT)
(72) Erfinder: Eberhardt, Nico, 01987 Schwarzheide (DE); Wacker, Sieghard, 6621 Bichlbach (AT); Bogner, Hans, 6600 Lechaschau (AT)
(74) Vertreter: Lohnert, Wolfgang, Dr.

(56) Entgegenhaltungen:
- EP-A- 0 526 046
- EP-A- 0 543 353
- DE-A- 4 318 424
- DE-A- 19 748 874
- GB-A- 1 011 486
- PATENT ABSTRACTS OF JAPAN vol. 1996, no. 07, 31. Juli 1996 (1996-07-31) -& JP 08 057532 A (HONDA MOTOR CO LTD), 5. März 1996 (1996-03-05)
- PATENT ABSTRACTS OF JAPAN vol. 016, no. 094 (M-1219), 9. März 1992 (1992-03-09) -& JP 03 275240 A (HONDA MOTOR CO LTD), 5. Dezember 1991 (1991-12-05)
- PATENT ABSTRACTS OF JAPAN vol. 009, no. 198 (M-404), 15. August 1985 (1985-08-15) -& JP 60 061134 A (MITSUBISHI JUKOGYO KK;OTHERS: 01), 8. April 1985 (1985-04-08)
- DATABASE INSPEC/IEE [Online] Inspec No. Zeitschrifft für Metallkunde, November 1998 (1998-11) N.EBERHARDT ET AL: "Powder metallurgical manufacturing and characterisation of components made of intermetallic alloy Ti-46.5Al-4(Cr,Nb,Ta,B)" XP002119146

## Beschreibung

Die Erfindung betrifft ein Verfahren zur Herstellung eines Tellerventiles aus γ-TiAI-Basislegierungen für Verbrennungskraftmaschinen, mit den Ventil-Abschnitten zylindrischer Teller der Stärke S, Konus und Schaft, in Ausgestaltung einer zumindest endabmessungsnahen Ventilform durch primäres Umformen eines homogenen Rohlings und daran anschließendes sekundäres Umformen.

Legierungen auf γ-TiAl-Basis gehören zur Gruppe der intermetallischen Werkstoffe, die in ihren Eigenschaften zwischen jenen der Metalle und jenen der Keramiken liegen.

Von technischer Bedeutung bei den γ-TiAl-Basislegierungen sind Legierungen mit einem Aluminiumgehalt zwischen 45 und 48 Atom%, das heißt in der Praxis zweiphasige Legierungen mit einer γ-TiAl-und einer α₂-Ti₃Al-Phase oder mehrphasige Legierungen, falls der Legierung noch weitere die Eigenschaften verbessernde Legierungselemente zugesetzt werden.

Als zusätzliche Legierungselemente kommen vorzugsweise Chrom, Mangan und Vanadium zur Steigerung der Raumtemperatur-Duktilität, Niob, Tantal, Molybdän und Wolfram zur Steigerung der Oxidationsbeständigkeit und zur Festigkeitssteigerung, sowie Silizium, Bor und Kohlenstoff zur Steigerung der Warmfestigkeit, der Kriechfestigkeit, zur gezielten Einstellung von lamellaren Gefügetypen sowie zur Verbesserung der Verarbeitbarkeit der Legierungen in Frage.
Diese Legierungselemente sind in Summe innerhalb eines Bereiches von etwa 1 - 20 Atom% in den γ-TiAl-Basislegierungen von praktischer Bedeutung.

Da γ-TiAl-Basislegierungen neben ihrer niedrigen Dichte gute Oxidationsbeständigkeit und gute mechanische Eigenschaften bis zu Temperaturen von 750°C aufweisen, werden sie unter anderem in steigendem Umfang für Schaufeln von Gasturbinen und Ventile für Verbrennungskraftmaschinen eingesetzt.

Da die meisten intermetallischen Werkstoffe, so auch γ-TiAl-Basislegierungen bei Raumtemperatur und wegen der starken Dehnratenabhängigkeit der Fließspannung auch bei Temperaturen oberhalb der spröd/duktil-Übergangstemperatur ein sprödes Verhalten aufweisen, ist die Herstellung von Fertigprodukten vielfach verfahrenstechnisch aufwendig, kostenintensiv und sehr stark von den Umformbedingungen abhängig.

Die Herstellung des Ausgangsmaterials ist auf schmelzmetallurgischem oder auf pulvermetallurgischem Weg möglich. Zum Erreichen der bestmöglichen Werkstoffeigenschaften, die im Falle von γ-TiAl-Basislegierungen sehr stark von Korngröße, Phasenverteilung und Gefügehomogenität abhängen, und zum Erreichen der gewünschten Endform ist vielfach eine weitere mechanische Verformung des Ausgangsmaterials erforderlich. Superplastische Umformung, Strangpressen, Gesenkschmieden oder Walzen, in der Regel unter isothermen oder quasi isothermen Bedingungen, haben sich dabei bewährt.

Die DE-PS 43 18 424 beschreibt z.B. ein Verfahren zur Herstellung von Formkörpern aus γ-TiAl-Legierungen, beispielsweise auch Ventile und Ventilteller für Motoren.

Durch dieses Verfahren wird ein Gussrohling zuerst bei einem Temperaturbereich von 1050 bis 1300°C unter quasi isothermen Bedingungen mit einem hohen Umformgrad verformt, danach abgekühlt und schließlich im Temperaturbereich von 900 bis 1100°C bei geringen Dehngeschwindigkeiten von 10⁻⁴ bis 10⁻¹/s zum endabmessungsnahen Formteil superplastisch umgeformt.

Nachteilig dabei ist, dass dieses Verfahren relativ langsam, verfahrenstechnisch aufwendig und damit kostenintensiv ist.

Die DE-A-19748874 betrifft das einmalige Warmumformen von γ-TiAl-Legierungen und beschreibt die Anwendung als Ein- und Auslassventile in Verbrennungsmotoren.

Die JP-A-08-057532 beschreibt ein Strukturbauteil das durch Strangpressen in einer Randzone zwischen Teller und Schaft angeformt wird. Dort wird zunächst der Stempel und anschließend die Matrize für einen zweiten Umformprozess des Kopfteiles unter plastischem Materialfluss vom dickeren in den dünneren Bauteil in den Abmessungen verändert.

Die GB-A-1011486 beschreibt ein Verfahren, nach dem ein Ventil aus nicht näher genanntem Werkstoff mittels Extrusionsprozess gemeinsam mit einem Füllerkem aus Stahl extrudiert wird.

Die JP-A-03-275240 zeigt ein Verfahren, nach dem durch einen Heißextrudiervorgang an einer Fläche des Tellers aus Verschleißgründen ein Belag einer Granularsubstanz aufgebracht wird.

Aufgabe der vorliegenden Erfindung ist es daher, ein Verfahren zur Herstellung von Tellerventilen für Verbrennungskraftmaschinen aus γ-TiAI-Basislegierungen zu schaffen, das kostengünstig arbeitet und das dennoch die notwendigen Werkstoffeigenschaften zur Erfüllung der Anforderungen an derartige Bauteile ermöglicht.

Diese Aufgabe ist durch die Merkmale gemäß A.1-7 gelöst.

Erfindungsgemäß wird dies dadurch erreicht, dass das primäre Umformen derart erfolgt, dass der γ-TiAl-Rohling danach in etwa den Durchmesser D des Ventiltellers und die für den Ventilteller geforderten Werkstoffeigenschaften aufweist und das sekundäre Umformen durch Strangpressen des primär umgeformten Rohlings unter Verwendung einer Matrize erfolgt, die so ausgestaltet ist, dass der Durchmesser der Eingangsöffnung in etwa dem des primär umgeformten Rohlings entspricht und ein diesem Durchmesser entsprechender zylindrischer Abschnitt über eine etwa dem Ventilkonus entsprechende Verjüngung in die Ausgangsöffnung übergeht, welche zumindest näherungsweise dem Durchmesser d des Ventilschaftes entspricht und dass der Strangpressvorgang mit Erreichen der Stärke S des Ventiltellers beendet wird.
Dadurch entsteht ein Bauteil mit Übergangsbereich zwischen den Werkstoffgefügen, eingestellt durch das primär bzw. sekundäre Umformen.

Durch den zweimaligen Umformvorgang kommt es regelmäßig im Schaft zu sehr hohen Umformgraden, die im Bereich zwischen 50 und 500:1 liegen und bisher bei der Verformung von γ-TiAl-Basislegierungen nicht zur Anwendung gekommen sind und sich überraschenderweise ohne größere Probleme bewerkstelligen lassen. Auch die Herstellung des Ventiltellers und des Ventilschaftes als einstückige Baueinheit lässt sich mit dem erfinderischen Verfahren, d. h. mittels eines kontinuierlichen Überganges zwischen den unterschiedlichen Gefügestrukturen im Schaft- und Tellerbereich des Bauteiles ohne weiteres lösen. Im Gegensatz dazu werden Ventile aus Stahl nach dem Stand der Technik überwiegend zweiteilig hergestellt und zwar als Ventilteller mit angeformtem Schaftteil sowie als Restschaft. Diese aus verschiedenen Werkstoffen bestehenden Teile werden durch Reibschweißen miteinander verbunden.

Die erfindungsgemäße Lehre für das primäre Umformen eines γ-TiAl-Ausgangsmaterials trägt der praktischen Erfahrung Rechnung, dass schmelzmetallurgisch gefertigte Ausgangsmaterialien vielfach eine sehr inhomogene Komgrößenverteilung und vergleichsweise grob lamellaren Komaufbau aufweisen. Das primäre Umformen dient vornehmlich einer Gefügehomogenisierung durch Zertrümmern der großen Körner im Material. In Abhängigkeit von Werkstofftemperatur und Geschwindigkeit der Umformung lässt sich dabei bekanntermaßen gleichzeitig eine Komgefügefeinung innerhalb weiter Grenzen steuern, mit dem Ziel, ein vorbestimmtes Eigenschaftsspektrum im Werkstoff einzustellen.
Das primäre Umformen erfolgt vorzugsweise durch Strangpressen, kann aber auch durch Rundwalzen oder Rundhämmern oder für diesen Zweck verwendete andere Verfahren erfolgen.

Sofern das primäre Umformen durch Strangpressen erfolgt ist es besonders vorteilhaft, wenn die Temperaturen im Bereich von 1000 bis 1350°C und die Dehngeschwindigkeiten im Bereich von 10⁻³ - 1/s und Umformgraden im Bereich bis 50:1 liegen.

Das sekundäre Umformen durch Strangpressen erfolgt vorteilhafterweise bei Temperaturen im Bereich von 1000 bis 1420°C, bei Dehngeschwindigkeiten im Bereich von 10⁻² - 10²/s und Umformgraden im Bereich von 5-80:1 im Verhältnis zum primär umgeformten Rohling. Liegt die Umformtemperatur im oberen Temperaturbereich, kann die Alpha-Transustemperatur beim Strangpressen überschritten werden, was die Ausbildung eines feinlamellaren, hochkriechfesten Gefüges begünstigt. Solche Gefügetypen, die durch extrem feine Lamellenabstände gekennzeichnet sind, lassen sich nur durch thermomechanische Fertigung herstellen, da anschließende Wärmebehandlungen zu deutlich breiteren Lamellenabständen führen.

Um eine Oxidation der γ-TiAl-Basislegierungen während der primären und sekundären Umformung zu verhindern, ist es vorteilhaft, die Legierung vor dem jeweiligen Umformvorgang in einen Schutzmantel einzukannen. Besonders bewährt hat es sich, wenn als Werkstoff für das Kannungsmaterial nichtrostender Stahl verwendet wird und zwischen Kannungsmaterial und γ-TiAl-Werkstoff eine Diffusionssperre in Form einer Molybdänschicht vorgesehen wird. Die Diffusionssperre verhindert die Bildung eines niedrigschmelzenden Eutektikums zwischen der TiAI-Legierung und dem Eisen des Schutzmantels. Das Molybdän kann beispielsweise durch Plasmaspritzen auf die Oberfläche der TiAI-Legierung aufgetragen werden. Zusätzlich kann die TiAl-Legierung noch in Molybdänfolie eingepackt werden.

Die beschriebene Einkannung ist lediglich eine besonders vorteilhafte Ausgestaltung des erfindungsgemäßen Verfahrens. Bei geeigneter Prozessführung kann statt der beschriebenen Kanne aus Stahl auch ein Schutzmantel aus Glas verwendet werden. Durch die Verwendung von Schutzgasschleiern oder ähnlichen Maßnahmen zum Oxidationsschutz kann unter Umständen auf jegliche Einkannung verzichtet werden.

Nach der ersten Umformung wird der Rohling auf die erforderliche Länge abgelängt und in der Regel die Kanne durch mechanische Bearbeitung entfernt. Danach wird der Rohling erneut eingekannt und sekundär durch Strangpressen umgeformt. Bei entsprechender Dimensionierung der Kanne ist es auch denkbar, dass die Kanne für die Primärumformung nach der Umformung noch in einem so guten Zustand erhalten ist, dass sie vor der Sekundärumformung nicht entfernt werden muss, sondern für das sekundäre Strangpressen weiter verwendet werden kann.
Besonders vorteilhaft ist es, wenn als Material für die Strangpreßmatrize eine hochwarmfeste Molybdänlegierung, z.B. MHC mit 1,2 Gew.% Hafnium, 0,1 Gew.% Kohlenstoff, Rest Molybdän, verwendet wird.
Als γ-TiAl-Legierung für den besonderen Verwendungszweck als Tellerventil für Verbrennungskraftmaschinen hat sich eine Legierung mit der Zusammensetzung 46,5 At% Al, 2,5 At% Cr, 1 At% Nb, 0,5 At% Ta, 0,1 At% B, Rest Ti als besonders geeignet bewährt.

Im folgenden wird die Erfindung anhand von Figuren und anhand eines Herstellungsbeispieles näher erläutert.

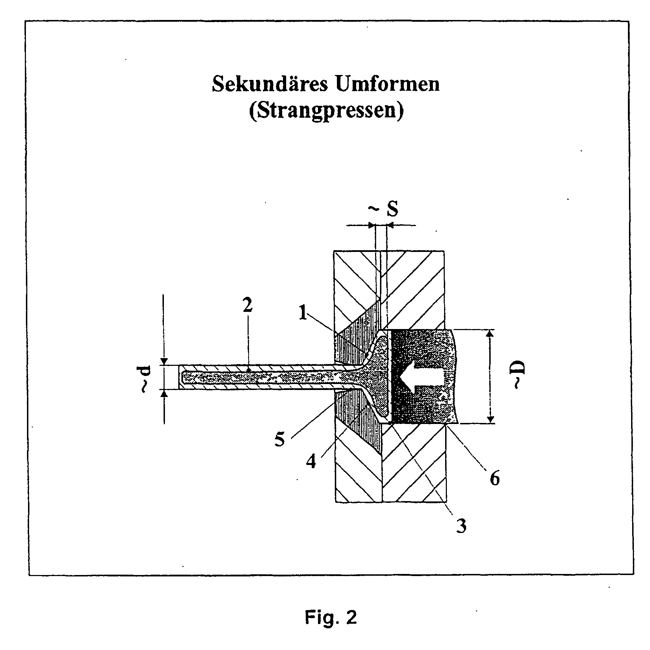

Es zeigen:

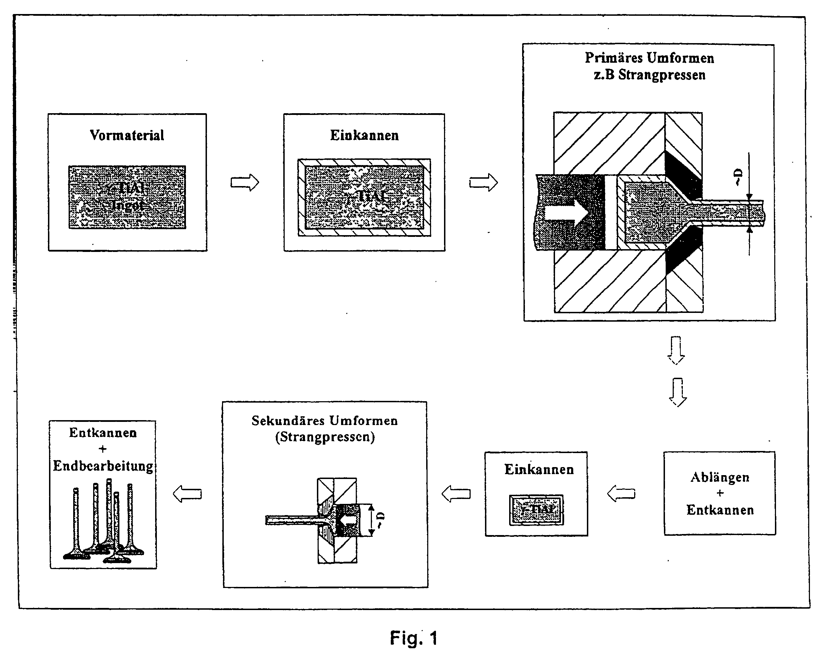

Figur 1 den prinzipiellen Ablauf des erfindungsgemäßen Herstellungsverfahrens
   als Flussdiagramm
Figur 2 den Fertigungsabschnitt Strangpressen nach Figur 1 in vergrößertem Maßstab

### BEISPIEL:

Durch Gießen wurden γ-TiAl-Ingots der Zusammensetzung Ti-46,5Al-2,5Cr-1Nb-0,5Ta-0,1B (Atom%) mit etwa 180 mm Durchmesser und 450 mm Länge hergestellt. Aus nichtrostendem Stahl X5CrNi1810 wurden hohlzylindrische Strangpresskannen mit einer Länge von 410 mm und einem Außendurchmesser von 206 mm und einem Innendurchmesser von 164,8 mm hergestellt. Von den gegossenen γ-TiAl-Ingots wurde durch Drehen die Gusshaut entfernt und die Ingots auf die Innengeometrie der Strangpresskannen angepasst und mit Alkohol gereinigt. Dann wurden die Ingots sandgestrahlt und durch Plasmaspritzen oberflächlich mit einer Molybdänschicht versehen, in Molybdänfolie eingepackt und in die Strangpresskanne eingeschoben. Zum Verschließen der Strangpresskanne wurde der Boden- und der Kopfbereich der zylinderförmigen Strangpresskanne mit entsprechenden Stahlteilen verschweißt. Danach erfolgte die Erstumformung der eingekannten γ-TiAl-Ingots durch Strangpressen. Dazu wurden die Ingots zunächst induktiv in drei Stufen, 700°, 800° und 1150°C vorgewärmt. Nach dem Vorwärmen wurden die Strangpresslinge wiederum induktiv auf Strangpresstemperatur von 1230°C gebracht. Die verwendete Strangpressmatrize hatte einen Eingangsdurchmesser von 210 mm, eine konusförmige Öffnung mit einem Winkel von 150°, sowie einen Ausgangsdurchmesser von 60 mm, was etwa dem Tellerdurchmesser D des fertigen Ventiles entspricht. Das Pressverhältnis betrug 12,2:1. Die Pressgeschwindigkeit wurde manuell eingestellt und betrug ca. 60 mm/s. Durch dieses Strangpressen wies der erhaltene Strangpressling die für den Teller des fertigen Ventiles notwendige Verdichtung und mechanischen Festigkeiten auf.
Die primär umgeformten, stranggepressten γ-TiAl-Stäbe wurden anschließend mittels Wasserstrahlschneidens auf eine Länge von 40 mm abgelängt. Anschließend wurde von den Presslingen die Stahlkapsel durch Drehen entfernt.
Diese Presslinge wurden wie beim ersten Einkannvorgang erneut mit einer Molybdän-Diffusionsbarriere durch Plasmaspritzen versehen. Auf das Umwickeln mit Molybdän-Folie wurde verzichtet. Danach wurden die Presslinge in zylindrische Stahlkapseln aus St37 mit einer Länge von 45 mm, einem Außendurchmesser von 57 mm und einem Innendurchmesser von 47 mm eingeschoben und die Kanne durch Verschweißen eines Bodenteiles geschlossen. Der zweite Umformschritt erfolgte durch Strangpressen im γ/α-Phasengebiet bei einer Umformtemperatur von 1300°C. Die Matrize war aus einer MHC-Legierung (Mo-1,2Hf-0,1C) gefertigt. Der Eingangsdurchmesser -6- der Matrize betrug 60 mm, die konusförmige Öffnung -4- wies einen Winkel von 105° auf. Der Ausgangsdurchmesser -5- der Matrize entsprach in etwa dem gewünschten Durchmesser d des Ventilschafts -2-. Der Eingangsdurchmesser -6- entsprach etwa dem Durchmesser D des Ventiltellers. Die Matrize wurde vor dem Strangpressen mit einem Graphit-Ölgemisch eingeschmiert. Der Strangpressvorgang wurde bewusst nach einem vorher festgelegten Stempelweg abgebrochen, sobald in etwa die gewünschte Stärke S des Ventiltellers erreicht war. Da auf diese Weise der Ventilteller nicht bzw. nur wenig verformt wird, ist der Einsatz von primär verformtem Vormaterial, das bereits die für den Ventilteller benötigten Materialeigenschaften aufweist, eine Voraussetzung für den erfindungsgemäßen Herstellungsprozess. Anschließend an den Strangpressvorgang erfolgte die Endbearbeitung der gepressten Rohlinge auf das gewünschte Endmaß durch Drehen.

## Patentansprüche

1. Verfahren zur Herstellung eines Tellerventiles aus γ-TiAl-Basislegierungen für Verbrennungskraftmaschinen, mit den Ventil-Abschnitten zylindrischer Teller der Stärke S, Konus (1) und Schaft (2), in Ausgestaltung einer zumindest endabmessungsnahen Ventilform durch primäres Umformen eines homogenen Rohlings und daran anschließendes sekundäres Umformen,
**dadurch gekennzeichnet,**
**dass** das primäre Umformen bei Temperaturen im Bereich von 1000 und 1350°C und bei Umformgraden in Bereich 5 bis 50 : 1 derart erfolgt, dass der γ-TiAl-Rohling danach in etwa den Durchmesser D des Ventiltellers und die für den Ventilteller geforderten Werkstoffeigenschaften aufweist und das sekundäre Umformen durch Strangpressen des primär umgeformten Rohlings unter Verwendung einer Matrize erfolgt, die so ausgestaltet ist, dass der Durchmesser der Eingangsöffnung (6) in etwa dem des primär umgeformten Rohlings entspricht und ein diesem Durchmesser entsprechender zylindrischer Abschnitt (3) über eine etwa dem Ventilkonus entsprechende Verjüngung (4) in die Ausgangsöffnung (5) übergeht, welche zumindest näherungsweise dem Durchmesser d des Ventilschaftes (2) entspricht und dass der Strangpressvorgang mit Erreichen der Stärke S des Ventiltellers beendet wird.

2. Verfahren zur Herstellung eines Tellerventiles nach Anspruch 1, **dadurch gekennzeichnet, dass** die primäre Umformung durch Strangpressen bei Temperaturen im Bereich von 1000 bis 1350°C bei Dehngeschwindigkeiten im Bereich von 10⁻³-1/s und Umformgraden im Bereich bis 50:1 erfolgt.

3. Verfahren zur Herstellung eines Tellerventiles nach Anspruch 1 oder 2,
**dadurch gekennzeichnet, dass** das sekundäre Umformen bei Temperaturen im Bereich von 1000 - 1420°C, bei Dehngeschwindigkeiten im Bereich von 10⁻² - 10²/s und Umformgraden im Bereich von 5 bis 80:1 im Verhältnis zum primär umgeformten Rohling erfolgt.

4. Verfahren zur Herstellung eines Tellerventiles nach einem der Ansprüche 2 bis 3, **dadurch gekennzeichnet, dass** das Ausgangsmaterial vor der primären und sekundären Umformung in einen Schutzmantel eingekannt wird.

5. Verfahren zur Herstellung eines Tellerventiles nach Anspruch 4, **dadurch gekennzeichnet, dass** Stahl als Werkstoff für das Kannungsmaterial verwendet wird und zwischen Kannungsmaterial und γ-TiAI-Werkstoff eine Diffusionssperre in Form einer Molybdänschicht vorgesehen wird.

6. Verfahren zur Herstellung eines Tellerventiles nach einem der Ansprüche 2 bis 5, **dadurch gekennzeichnet, dass** als Werkstoff für die Strangpressmatrizen eine Molybdänlegierung verwendet wird.

7. Verfahren zur Herstellung eines Tellerventiles nach einem der Ansprüche 1 bis 6, **dadurch gekennzeichnet, dass** als γ-TiAl-Legierung eine Legierung mit der Zusammensetzung 46,5 At% Al, 2,5 At% Cr, 1 At% Nb, 0,5 At% Ta, 0,1 At% B, Rest Ti verwendet wird.

## Claims

1. Process for the production of a poppet valve from γ-TiAl-based alloys for internal combustion engines, said valve comprising the valve sections cylindrical head of thickness S, cone (1) and stem (2), in the form of an at least near-net-shape valve by primary forming of a homogeneous blank and subsequent secondary forming,
**characterised in that**
primary forming is performed at temperatures in the range from 1000 to 1350°C and at forming ratios in the range from 5-50:1 in such a manner that, thereafter, the γ-TiAl blank exhibits approximately the diameter D of the valve head and the material properties required for the valve head, and the secondary forming of the primarily formed blank proceeds by extrusion using an extrusion die which is of a form such that the diameter of the inlet orifice (6) approximately corresponds to that of the primarily formed blank, and a cylindrical section (3) corresponding to this diameter develops via a taper (4) approximately corresponding to the valve cone into the outlet orifice (5), which at least approximately corresponds to the diameter d of the valve stem (2) and that the extrusion operation is terminated once the thickness S of the valve head is achieved.

2. Process for the production of a poppet valve according to claim 1, **characterised in that** primary forming proceeds by extrusion at temperatures in the range from 1000 to 1350°C, at strain rates in the range from 10⁻³-1/s and forming ratios in the range up to 50:1.

3. Process for the production of a poppet valve according to claim 1 or 2, **characterised in that** secondary forming proceeds at temperatures in the range from 1000-1420°C, at strain rates in the range from 10⁻²-10²/s and forming ratios in the range from 5-80:1, relative to the primarily formed blank.

4. Process for the production of a poppet valve according to one of claims 2 to 3, **characterised in that** the starting material is canned in a protective jacket before the primary and secondary forming.

5. Process for the production of a poppet valve according to claim 4, **characterised in that** steel is used as the material for the canning material and a diffusion barrier in the form of a molybdenum layer is provided between the canning material and the γ-TiAl material.

6. Process for the production of a poppet valve according to one of claims 2 to 5, **characterised in that** a molybdenum alloy is used as the material for the extrusion die.

7. Process for the production of a poppet valve according to one of claims 1 to 6, **characterised in that** an alloy with the composition 46.5 atom% Al, 2.5 atom% Cr, 1 atom% Nb, 0.5 atom% Ta, 0.1 atom% B, remainder Ti is used as the γ-TiAl alloy.

## Revendications

1. Procédé de fabrication, par une déformation primaire d'une ébauche homogène suivie d'une déformation secondaire, d'une soupape à champignon en alliage à base de TiAl-γ pour moteurs à combustion, constituée des parties suivantes de soupape: un champignon cylindrique d'épaisseur S, un cône (1) et une tige (2), et configurée selon une forme au moins proche des dimensions finales de soupape,
**caractérisé en ce que**
la déformation primaire est exécutée à des températures dans une plage de 100 à 1350°C et à des taux de déformation dans une plage de 5 à 50:1 d'une manière telle que l'ébauche en TiAl-γ est ensuite du diamètre D du champignon de soupape et possède les propriétés de matières nécessaires pour le champignon de soupape et la déformation secondaire est exécutée en extrudant l'ébauche après sa déformation primaire en utilisant une matrice dont la configuration est telle que le diamètre de l'ouverture d'entrée (6) correspond environ à celui de l'ébauche après déformation primaire et une partie cylindrique (3) qui correspond à ce diamètre se raccorde, selon un rétrécissement (4) qui correspond environ au cône de soupape, dans l'ouverture de sortie (5) qui correspond au moins approximativement au diamètre d de la tige (2) de soupape, et **en ce que** le processus d'extrusion est terminé lorsque le champignon de soupape atteint l'épaisseur S.

2. Procédé de fabrication d'une soupape à champignon selon la revendication 1, **caractérisé en ce que** la déformation primaire est exécutée par extrusion à des températures dans une plage de 1000 à 1350°C à des vitesses d'allongement comprises dans la plage de 10⁻³ à 1/s et selon des taux de déformation dans la plage de 50:1.

3. Procédé de fabrication d'une soupape à champignon selon la revendication 1 ou 2, **caractérisé en ce que** la déformation secondaire est exécutée à des températures dans une plage de 1000 à 1420°C, à des vitesses d'allongement dans la plage de 10⁻² à 10²/s et selon des taux de déformation dans une plage de 5 à 80:1 par rapport à l'ébauche après déformation primaire.

4. Procédé de fabrication d'une soupape à champignon selon la revendication 2 ou la revendication 3, **caractérisé en ce que** le produit de départ est gainé dans une enveloppe de protection avant les déformations primaire et secondaire.

5. Procédé de fabrication d'une soupape à champignon selon la revendication 4, **caractérisé en ce que** la matière utilisée pour le gainage est de l'acier et qu'une barrière de diffusion en forme de couche de molybdène est prévue entre la matière de gainage et la matière de TiAl-γ.

6. Procédé de fabrication d'une soupape à champignon selon l'une quelconque des revendications 2 à 5, **caractérisé en ce qu'**un alliage de molybdène est utilisé comme matière pour les matrices d'extrusion.

7. Procédé de fabrication d'une soupape à champignon selon l'une quelconque des revendications 1 à 6, **caractérisé en ce que** l'alliage TiAl-γ utilisé est un alliage dans lequel les teneurs atomiques sont 46,5% d'AI, 2,5% de Cr, 1% de Nb, 0,5 % de Ta, 0,1% de B, solde Ti.
